# EUROPEAN PATENT APPLICATION

(11) **EP 4 687 036 A1**
(43) Date of publication of application: **04.02.2026**
(21) Application number: 24192004.0
(22) Date of filing: 31.07.2024
(51) Int. Cl.: G06F 9/54, H04L 67/10

(54) **FACILITATING SECURE AND EFFICIENT COMMUNICATION BETWEEN SYNCHRONOUS AND ASYNCHRONOUS APPLICATIONS**

(71) Applicant: Barclays Execution Services Limited, London E14 5HP (GB)
(72) Inventor: NOTON, Laurence, London E14 5HP (GB)
(74) Representative: Carpmaels & Ransford LLP

(57) **Abstract**

There is provided an interface module for facilitating communication with a synchronous application programming interface, the module being configured to: generate or receive a message to be sent to the synchronous API; and determine whether or not the synchronous API has an idempotency check; wherein upon determining that the synchronous API has an idempotency check, the module is further configured to: perform no idempotency check; and send the message to the synchronous API, and wherein upon determining that the synchronous API does not have an idempotency check, the module is further configured to: perform an idempotency check; and send the message to the synchronous API if the message passes the idempotency check or not send the message to the synchronous API if the message fails the idempotency check.

## Description

### Technical Field

The invention relates to an interface module for facilitating communication with a synchronous application programming interface, a computer-implemented method, computer program, and computer-readable storage medium for achieving the same.

### Background

In contemporary digital environments, data has become ubiquitous, with a notable surge in the prevalence of protected data. Defined by its sensitive cognitive content and requirement for rigorous security measures, the prominence of protected data is steadily increasing. Consequently, there has been a corresponding escalation in the demand for systems specialised in processing protected data.

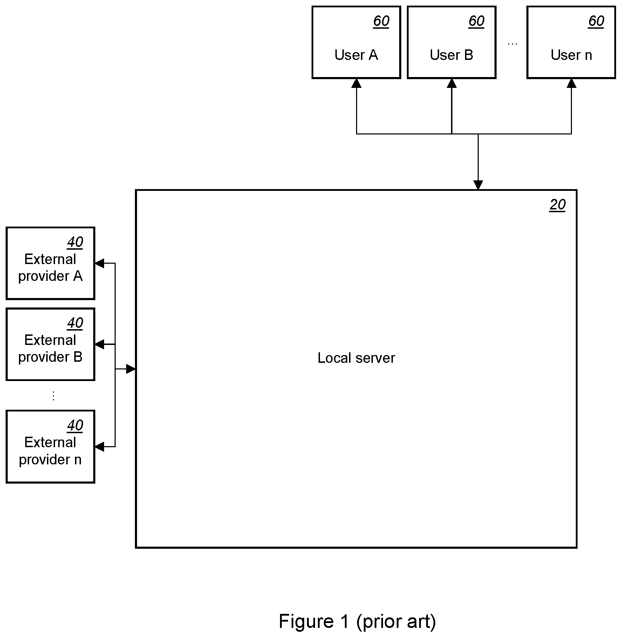

Traditionally, the processing of protected data has been centralised around local servers, as depicted in Figure 1. A local server serves as the focal point responsible for executing protected data processing tasks. These local servers are typically situated on-premises or within a private network environment, physically hosting a myriad of applications specialised in processing various aspects of protected data. In practical scenarios, these applications cater to diverse purposes, often corresponding to distinct products or services. For instance, in the context of consumer banking, one application may handle debit card transactions, while another may focus on credit card transactions.

Despite their historical prevalence, local servers are increasingly facing challenges for protected data processing. Such challenges include scalability constraints, overhead associated with maintenance, geographic limitations, data protection compliance, security vulnerabilities, computer resource redundancy, and latency issues. In light of these challenges and the ever-increasing complexity of the data processing landscape, a need has emerged for systems for processing protected data that transcend the limitations of local servers.

Component processing units within systems for executing data processing tasks, which might themselves be individual servers, may have distinct purposes, and may have specific permissions, storage, or processing requirements suited to those purposes. These component processing units must therefore regularly communicate data processing tasks to one another.

It can be important to ensure that the effect of executing a data processing task occurs only once for a number of reasons, including data accuracy, data security, and computational efficiency.

This can be achieved, for example, by ensuring that the task is sent or processed only once, or by ensuring that multiple executions of the task have the same effect as a single execution. In either case, ensuring that the effect of executing a given processing task occurs only once (by ensuring that it is sent and/or processed at its destination only once, or by checking that multiple executions have identical effect to a single execution) is referred to herein as ensuring idempotency.

Erroneously processing a task twice rather than once, for example, could lead to the effect of execution of the task occurring twice. A double-executed 'write' task could lead, for example, to two new entries being introduced to a storage location, where only one should have been introduced.

Not only is there a computational inefficiency associated with this double-entry, but also inaccuracy and lack of security.

Inaccuracy may arise when searching the data store, for example, to determine how many data entries having a certain property appear in the data store. A prior double-executed 'write' task could lead to two identical entries, which will now be counted twice in a search.

Furthermore, if a subsequent task attempts to remove the entry, and this subsequent task is successfully executed only once, one copy of the entry could remain stored. It is critical that this should not happen for any data entry, but particularly for protected data of the kind that will be described in greater detail herein. Sharing of the stored data, under the incorrect assumption that the protected entry has been removed, could then represent a data breach. Additionally, the failure to remove the protected entry may be problematic in and of itself, where, for example, a user has requested that they be 'forgotten' by the data store.

Idempotency is therefore one way to ensure that no deleterious effects arise from processing tasks more than once.

US 10,810,662 B1 describes one way in which idempotency can be achieved, by using a Balance Tracker Application to perform an idempotency check on requests to update a value. Tasks are associated with a deterministically generated idempotency key, i.e. the content of the key is dependent on the content of the value update, such that identical value update requests will generate identical keys. The idempotency key is inserted into an idempotency table. If the key exists already in the table, the Balance Tracker Application determines that the value update has likely already been executed and confirms whether or not this is the case by checking the value. If the update request has already been executed, the later-received request is ignored.

There remains a need for methods of communication between applications that provide improved computational efficiency, accuracy, and security.

### Summary

The present invention is defined by the independent claims, with further optional features being defined by the dependent claims.

In a first aspect of the invention, there is provided an interface module for facilitating communication with a synchronous application programming interface (API), the module being configured to: generate or receive a message to be sent to the synchronous API; and determine whether or not the synchronous API has an idempotency check; wherein upon determining that the synchronous API has an idempotency check, the module is further configured to: perform no idempotency check; and send the message to the synchronous API, and wherein upon determining that the synchronous API does not have an idempotency check, the module is further configured to: perform an idempotency check; and send the message to the synchronous API if the message passes the idempotency check or not send the message to the synchronous API if the message fails the idempotency check.

In this way, the invention provides a computationally efficient and secure method of communication between applications in a scalable and efficient system for processing protected data. In particular, the invention ensures idempotency in communication between a synchronous API and an asynchronous API in a computationally efficient and secure manner.

In general, APIs may be asynchronous or synchronous. If a message (which may also be referred to as a request), is submitted to a synchronous API, the synchronous API generally will not return a response until it has something substantive to report: reporting successful processing of the request or reporting an error, for example. While the synchronous API processes the request, and before its response has been returned, the request is pending and is using computational resources at both the sender and the receiver API. The computational resources only cease to be used once the request has been responded to and is no longer pending. This is not computationally efficient.

There are synchronous environments which use parallel processing (e.g. multi-threading) in which the sender can continue to send messages while waiting for a response to its original message. However, even though there are some benefits to processing multiple messages in parallel, each of the now-multiple pending messages consumes computational resources at the sender, as well as at the receiver, whilst pending.

Asynchronous APIs, on the other hand, generally provide an immediate response before the message has finished processing. The sender (e.g. the API that sent the message) continues with its next task without consuming computational resources maintaining a pending request. The asynchronous API (or other component downstream of the asynchronous API) processes the message. This is a different form of parallel processing because the sender is not taking up computational resources whilst the asynchronous API performs the tasks. Where a number of cascading tasks need to be performed by a number of processing entities, time can be saved by using asynchronous APIs processing the tasks in parallel without leading to a continually rising computational resource requirement at the sender.

Systems are most often built either to be synchronous or to be asynchronous. A system comprising a mix of synchronous and asynchronous APIs may is likely to be somewhat disadvantageous because the synchronous API can cause a bottleneck of messages, limiting the entire system's ability to process messages in parallel. This occurs because the synchronous API will not provide a response allowing the asynchronous environment to continue its processing in parallel, thereby hindering the processing efficiency of the asynchronous environment.

Systems in which communication between synchronous and asynchronous APIs is necessary can also have issues with ensuring idempotency, because the synchronous and asynchronous systems may use different protocols for ensuring idempotency. It is also possible, particularly for synchronous APIs, that there is no specific idempotency provision upon receipt of a message at the API.

However, despite these potential drawbacks, it is sometimes necessary, either within a single system, or between adjacent systems, for an asynchronous environment to communicate with a synchronous environment. In other words, an asynchronous environment may need to communicate with a synchronous API.

Simply overriding the requirement that a response must be received from the synchronous API before the sender proceeds further is not an effective solution. Although this may stop computational resources being used at the asynchronous environment while the request is pending, the risk that the synchronous API can now be sent a duplicate of the message that it is already processing is increased. The synchronous API may, for example, have been operating using single-threading and may thus have been relying on the sender ceasing sending new requests while the original request is pending. Message duplication can be disadvantageous for a number of reasons already detailed.

This, in turn, could be addressed by checking, at the asynchronous environment, and before sending any given message, that the given message is idempotent. This would significantly reduce the risk of multiple execution of that message. In other words, it is possible to perform an idempotency check at the asynchronous environment for every message that is to be sent. This is a computationally expensive solution, however, because an additional processing step must now be performed before any message can be sent, and each idempotency check could involve a number of computational operations.

Some messages (e.g. requests to retrieve data from an API) will be idempotent because they relate to data processing tasks which are inherently idempotent, i.e. tasks which have the same effect when executed multiple times as when executed once. Thus, the type of message must be checked.

Some messages (e.g. requests to write data to a storage location) will not be inherently idempotent, but may be idempotent because they are associated with metadata that ensures they cannot be sent and/or processed more than once. A sender might maintain a list of idempotency keys, for example, each associated with a message that it has previously sent. A lookup in this list prior to sending a message can determine that the message has been sent previously, and should not be sent again, thereby ensuring idempotency. Thus, the message must be checked for idempotency-relevant metadata. An API receiving messages and executing tasks can perform a similar check prior to executing any received task.

Performing an idempotency check for every message to be sent is therefore computationally expensive.

In order to address all of the above drawbacks of synchronous-asynchronous communication, the present invention utilises a selective idempotency check on the sender-side to eliminate the risk of multiply-actioned messages, and does so in a manner that is particularly computationally efficient.

The present invention advantageously recognises that some, but not all, synchronous APIs perform their own idempotency checks. Making a determination as to whether or not the target synchronous API performs its own idempotency check is more computationally efficient than always actively performing an idempotency check at the sender-side, and then having a second (redundant) idempotency check being performed at the synchronous API.

It is therefore possible to forego performing a sender-side idempotency check at the asynchronous environment when sending messages to certain synchronous APIs, without introducing any risk to effective and/or secure operation of the system, and avoiding incurring the associated computational inefficiency.

The present invention therefore first determines whether a sender-side idempotency check is required, and then acts accordingly, either performing a sender-side idempotency check or not doing so. In this context, performing an idempotency check may comprise making a determination as to whether there is a possibility that sending a message could cause more than one execution of a data processing task intended only to be executed once. This can include, for example, determining whether or not a certain message has already been sent and/or determining that a data processing task associated with a message is inherently idempotent (multiple executions are equivalent to a single execution).

A message may pass an idempotency check if, for example, it has not previous been sent and/or if the data processing task associated with the message is inherently idempotent. A message may fail an idempotency check if, for example, it has both been previously sent and is not inherently idempotent.

The interface module may, having generated or received the message, determine which synchronous API(s) the message is to be sent to (the target synchronous API). If the message is to be sent to a plurality of synchronous APIs, the steps of determining whether or not the synchronous API has an idempotency check may be performed for each target synchronous API, either in turn or in parallel. An idempotency check may then be performed at the interface module for each synchronous API that it is determined will not perform its own idempotency check.

The interface module may be further configured, after sending the message to the synchronous API and whether or not the synchronous API has an idempotency check, to: perform a subsequent action without requiring any response from the synchronous API to acknowledge receipt or confirm actioning of the message.

In this way, the present invention allows the asynchronous environment to retain its beneficial parallel-processing capabilities, whilst allowing it to communicate effectively and securely with synchronous APIs. The present invention can proceed in this way without sacrificing effective and secure operation of the system because message idempotency is assured.

The interface module may be configured to determine whether or not the synchronous API has an idempotency check by being configured to: retrieve trait information from a storage location in the interface module, wherein the trait information comprises at least one trait of the synchronous API, and wherein the at least one trait comprises the existence or not at the synchronous API of an idempotency check; and determine whether or not the synchronous API has an idempotency check based on the retrieved trait information.

In this way, a particularly computationally efficient determination can be made as to whether or not a sender-side idempotency check must be performed. In particular, by storing the trait information in the interface module, no external messages or requests need to be sent in order to make the determination.

In this context, trait information includes any property information related to the synchronous API. Trait information may include security information, for example authentication certificates, as well as operational information such as retry procedures and keys. Trait information includes the existence or not of an idempotency check at the synchronous API, and may include additional information regarding the specific implementation of the idempotency check.

The storage location in the interface module may be, for example, a lookup table comprising information related to any or all synchronous APIs in communication with the asynchronous environment, with associated idempotency data. The trait information may have previously been stored in the storage location by the interface module after having been retrieved via a request for trait information sent to the synchronous API.

The interface module may be configured to determine whether or not the synchronous API has an idempotency check by being configured to: i) send, to the synchronous API, a request for trait information, wherein the trait information comprises at least one trait of the synchronous API, and wherein the at least one trait comprises the existence or not at the synchronous API of an idempotency check; ii) receive the trait information from the synchronous API; and iii determine whether or not the synchronous API has an idempotency check based on the received trait information.

In this way, the present invention can determine whether or not the synchronous API will perform its own idempotency check if sent a message, even if the relevant trait information for the target synchronous API is not yet known.

Steps i) to iii) may be performed after an attempt has been made to retrieve trait information for the target synchronous API from a storage location at the interface module, and a determination being made that the storage location does not yet comprise such trait information.

If one or both of the attempts to obtain trait information fails, the interface module may perform an idempotency check. In other words, if trait information can neither be retrieved from a storage location at the interface module, not received from the synchronous API (for example, if no response is received from the synchronous API in respect of the request for trait information), the interface module may perform an idempotency check before sending the message or may not send the message. In this way, security and effective operation of the system is ensured.

The interface module may be further configured to: generate or receive a second message to be sent to the synchronous API; and repeat steps i) to iii) for the second message.

This may be advantageous for certain messages and/or certain synchronous APIs for which trait information should be rechecked for every message. Rechecking trait information for every message may still be more computationally efficient for the interface module than performing an idempotency check which is redundant if the synchronous API will also perform an equivalent check. Messages and APIs associated with particularly highly secure or sensitive data, for example, may warrant requesting, rather than retrieving, trait information for each message.

The interface module may be further configured to: generate or receive a second message to be sent to the synchronous API; retrieve the previously received trait information from a storage location in the interface module; and repeat step iii) for the second message based on the previously received trait information.

In this way, yet further computational efficiency can be achieved because the synchronous API need not be actively queried when next the target for a message.

The interface module may be further configured to: generate or receive a second message to be sent to the synchronous API; retrieve the previously received trait information; identify a time period since the trait information was received; and if the time period is less than a threshold value, repeat step iii) for the second message based on the previously received trait information, or if the time period is greater than a threshold value, repeat steps i) to iii) for the second message.

In this way, the present invention can ensure that stored trait information does not become significantly out of date, whilst still benefitting from the relative computational efficiency associated with retrieving trait information from a storage location rather than requesting it for each message. Trait information, in this case, may be stored alongside a timestamp generated at the time that the trait information is received at the asynchronous environment.

The threshold value may be input manually and may be fixed, or may be determined by the interface module based on the message to be sent. For example, a message flagged (e.g. in its metadata) as being of relatively high sensitivity may prompt a lower threshold value to be used, i.e. the interface module may be stricter as to the acceptable age of the retrieved trait information.

The interface module may be further configured to: receive, from the synchronous API, a response to the message, the response comprising confirmation of successful actioning of the message or an error report.

In this way, the asynchronous environment can receive from the synchronous API the output usually provided by the synchronous API, and can act accordingly in response. For example, the asynchronous API may note and store confirmation of successful actioning of the message and generate a new message in response. The interface module may also update information related to idempotency checks to record that a certain message was successfully actioned, e.g. that a processing task associated with the message was executed.

The trait information may further comprise at least one of: authentication requirements; accepted message types; synchronicity; and format of response.

The interface module may be configured to interface between an asynchronous computing environment and a synchronous computing environment, the synchronous computing environment comprising the synchronous API.

In this way, the present invention can integrate otherwise incompatible computing environments in a computationally efficient and secure manner. For example, where a legacy, on-premises, computing environment is implemented as a synchronous environment, the present invention allows an asynchronous, cloud-based, computing environment to communicate with the legacy environment.

The asynchronous computing environment may be an event-driven cloud computing environment and the synchronous computing environment may be a non-event-driven on-premises computing environment. The message and/or second message may comprise an event.

The interface module may be configured to perform an idempotency check by determining whether the message has previously been sent to the synchronous API, and wherein the interface module is configured to pass the idempotency check if the message has not previously been sent to the synchronous API and to fail the idempotency check if the message has previously been sent to the synchronous API. The interface module may be configured to perform an idempotency check by determining whether the message, if actioned more than once by the synchronous API, will have a duplicative effect, and wherein the interface module is configured to pass the idempotency check if the message will not have a duplicative effect and to fail the idempotency check if the message will have a duplicate effect. In this context, duplicative effect refers to any effect which is different from the effect of a single actioning of the message.

In a second aspect, there is provided a computer-implemented method for facilitating communication with a synchronous application programming interface, the method comprising, at an interface module: generating or receiving a message to be sent to the synchronous API; and determining whether or not the synchronous API has an idempotency check; wherein upon determining that the synchronous API has an idempotency check, the method further comprises: performing no idempotency check; and sending the message to the synchronous API, and wherein upon determining that the synchronous API does not have an idempotency check, the method further comprises: performing an idempotency check; and sending the message to the synchronous API if the message passes the idempotency check or not sending the message to the synchronous API if the message fails the idempotency check.

The method may further comprise performing, at the interface module, any step performed by the interface module of the first aspect.

In a third aspect, there is provided a data processing apparatus comprising means for carrying out the steps of the second aspect.

In a fourth aspect, there is provided a computer program comprising instructions which, when the program is executed by a computer, cause the computer to carry out the steps of the second aspect.

In a fifth aspect, there is provided a computer-readable storage medium comprising instructions which, when executed by a computer, cause the computer to carry out the steps of the second aspect.

### Brief Description of the Drawings

Embodiments of the invention are described below, by way of example, with reference to the following drawings, in which:
Figure 1 depicts a conventional system for processing protected data.
Figure 2 illustrates a cloud computing environment-based system for processing protected data in which the methods of the invention may be implemented.
Figure 3A and Figure 3B show components of a cloud computing environment for implementing the invention.
Figure 4A and Figure 4B show an example user device and example external provider system, respectively, that may be used in conjunction with the cloud computing environment-based system of the invention.
Figure 5 shows an example architecture of a cloud computing environment for implementing the invention.
Figure 6A, Figure 6B and Figure 6C show example integration patterns of a cloud computing environment for implementing the invention.
Figures 7A and 7B show examples of methods of communicating between a cloud computing environment and a local server according to embodiments of the invention.
Figure 8 shows as a flowchart a method according to embodiments of the invention for facilitating communication between an asynchronous environment and a synchronous application programming interface.

### Detailed Description

The present disclosure pertains to systems for processing protected data and methods related to processing protected data. Protected data, as referred to herein, is data that requires protecting due to its cognitive content. This means that protected data typically requires additional security provisions to prevent unauthorised access. Moreover, the storage and processing of protected data is often restricted. In some instances, the restriction is caused by local legislation, for example General Data Protection Regulation (GDPR) in the European Union, and the Data Protection Act 2018 in the United Kingdom. Protected data may include personal data, i.e., information relating to an identified or identifiable natural person. For example, secure data may include a name, an identification number, location data, an online identifier or one or more factors specific to the physical, physiological, genetic, mental, economic, cultural or social identity of a natural person. Protected data may also include financial data as an alternative or in addition.

Figure 1 illustrates a conventional system for processing protected data. As shown in Figure 1, such systems are centralised around a local server 20 that is responsible for performing the processing. The local server 20 is communicatively coupled to a plurality of user devices 60 (i.e. User A, User B... User n), from which processing requests may be received and to which processing outputs may be sent. Typically, a processing request relates to protected data of the user of the user device 40 that sends the request. The local server 20 is also communicatively coupled to a plurality of external provider systems 40 (i.e. External provider A, External provider B... External provider n), as some processes require input from an external provider to be performed. The communicative coupling is established via at least one communication network such as the Internet, a local area network (LAN), a wide area network (WAN), a cellular network (e.g. such as 3G, 4G LTE and 5G), and the like.

Local server 20 is a physical server or group of servers that are located on-premises or within a private network. Local server 20 stores a plurality of applications for processing protected data, each of the applications having a different purpose or underlying product to which it relates. For example, in a consumer banking context, one application may relate to debit card transactions while another application relates to credit card transactions.

The applications stored by local server 20 are typically batch-driven applications. This type of application is designed to process data in batches, where a set of data is collected, processed, and output before the next set of data is collected and processed. In this context, a 'batch' refers to a collection or grouping of data, tasks, or operations that are processed together as a single unit. Batch processing involves the execution of multiple tasks or data operations in a sequential or parallel manner, typically on a scheduled basis or when a predefined batch size is reached. Batches are often used to efficiently manage and process large volumes of data or perform complex operations that do not require real-time or immediate processing. For this reason, batch-driven applications may be thought of as synchronous applications. This is in contrast to event-driven applications which are asynchronous applications as the processing occurs once the data is received.

The local server 20 is configured to generate and receive messages in a relational data format. Relational data formats are structured and organised in tables, with rows representing records and columns representing attributes. This type of data format is commonly used in traditional database management systems and can be easily queried and manipulated using Structured Query Language (SQL). The use of a relational data format for message generation and reception at the local server 20 allows for compatibility with legacy systems and applications that rely on this type of data format.

### The Cloud Computing Environment

In contrast to conventional protected data processing systems such as the one depicted in Figure 1 where processing is performed primarily on the local server 20, the systems of the invention use a cloud computing environment 10 for protected data processing. Cloud computing environment 10 provides improved scalability, flexibility, reliability, and disaster recovery capabilities over local servers. This is because the infrastructure for cloud computing environment 10 is typically provided by dedicated cloud providers such as Amazon Web Services, Google Cloud or Microsoft Azure, that handle updates and maintenance of the infrastructure.

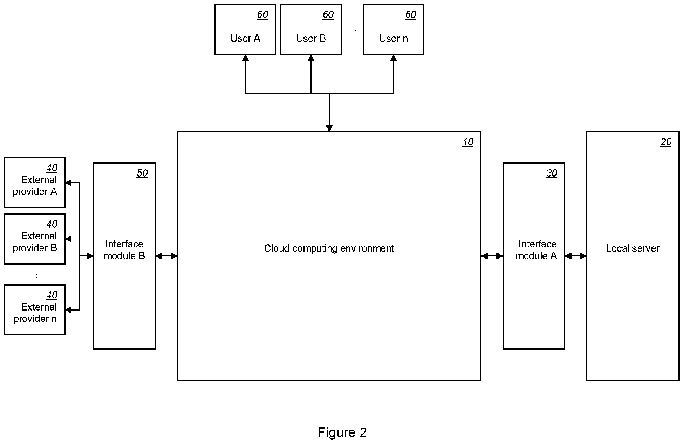

Figure 2 depicts an example system having a cloud computing environment 10 for processing protected data in which the methods of the invention may be implemented. As shown in Figure 2, the local server 20 is still present in this system. However, instead of being communicatively coupled to the plurality of user devices 60 and the plurality of external provider systems 40, the local server 20 is communicatively coupled to the cloud computing environment 10, and it is the cloud computing environment 10 which is communicatively coupled to the plurality of user devices 60 and the plurality of external provider systems 40. The communicative coupling is established via at least one communication network such as the Internet, a local area network (LAN), a wide area network (WAN), a cellular network (e.g. such as 3G, 4G LTE and 5G), and the like. Preferably, the at least one communication network utilises encryption (e.g., Secure Sockets Layer) to secure protected data being transferred to and from the cloud computing environment 10.

While the plurality of user devices 60 are able to natively couple to the cloud computing environment 10, for example via a dedicated application installed on the user device 60, local server 20 and external provider systems 60 typically contain legacy infrastructure and applications, and for this reason cannot natively be coupled to the cloud computing environment 10. This is because, unlike local server 20 and external provider systems 60 which use batch-driven applications, cloud computing environment 10 uses event-driven applications, where data is processed as events.

In the context of event-driven applications, an 'event' refers to a discrete and significant occurrence or notification within the cloud computing environment 10 that triggers a specific action or process. Events are used to signal that a particular condition or change has occurred and should be processed or responded to. For this reason, event-driven applications are designed to detect, capture, and respond to these events in real-time or near-real-time, allowing for responsive and dynamic behaviour within event-driven applications. Events can be generated by various sources, such as user interactions via user device 60, system events, or external sources such as external provider system 40 and local server 20, and they serve as the catalyst for initiating specific actions, processing logic, or workflows within the cloud computing environment 10.

Accordingly, interface modules are provided in the system to couple the local server 20 and the external provider systems 60 with the cloud computing environment 10. Specifically, Figure 2 shows a first interface module (interface module A) 30 that couples the local server 20 to the cloud computing environment 10, and a second interface module (interface module B) 50 that couples the external provider systems 60 to the cloud computing environment 10. Interface module A 30 and interface module B 50 may be outside and separate from the cloud computing environment. However, preferably, the cloud computing environment 10 contains interface module A 30 and interface module B 50. When interface module A 30 and interface module B 50 are provided in the cloud computing environment 10, these interface modules provide communicative coupling to the plurality of user devices 60 and the plurality of external provider systems 40, respectively.

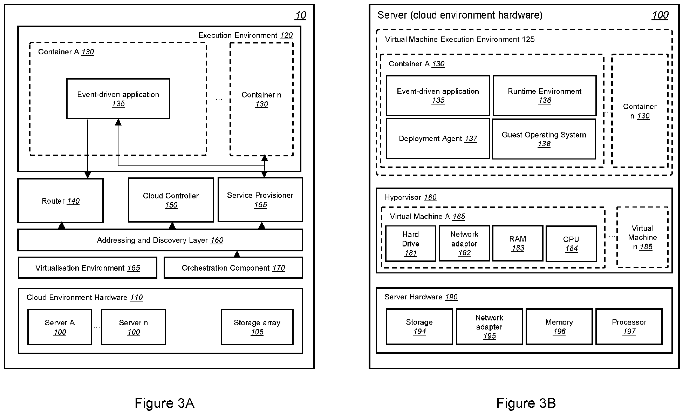

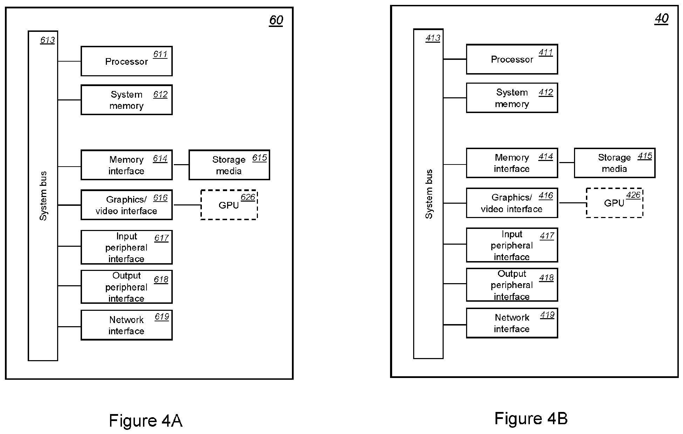

Before providing further details about cloud computing environment 10, interface module A 30, and interface module B 50, the components of cloud computing environment 10, as typically provided by a cloud provider, are discussed with respect to Figure 3A and Figure 3B. Additionally, an example user device 60 and example external provider system are discussed with respect to Figure 4A and Figure 4B.

As shown in Figure 3A, cloud computing environment 10 hosts one or more event-driven applications 135, which are executed in the cloud computing environment 10 for processing protected data that take the form of events. The event-driven application 135 may include executable and/or source code, depending on the implementation language. In this way, the computing resources required for processing protected data are moved from the local server 20, where the processing is performed in conventional systems, to cloud computing environment 10.

As seen in Figure 3A, cloud computing environment 10 comprises cloud computing environment hardware 110 that can be invoked to instantiate data processing, data storage, or other computer resources using cloud computing hardware 110 for a limited or defined duration. Cloud computing environment hardware 110 may comprise one or more physical servers 100, and a storage array network 105, as well as other suitable hardware. Cloud computing environment hardware 110 may be configured to provide a virtualisation environment 165 that supports the execution of a plurality of virtual machines 185 across the one or more physical servers 100. As described in relation to Figure 3B, the plurality of virtual machines 185 provide various services and functions for cloud computing environment 10.

Virtualisation environment 165 of Figure 3A includes orchestration component 170 that monitors the cloud computing environment hardware 110 resource consumption levels and the requirements of cloud computing environment 10 (e.g., by monitoring communications routed through addressing and discovery layer 160), and provides additional cloud computing environment hardware 110 to cloud computing environment 10 as needed. For example, if cloud computing environment 10 requires additional virtual machines 185 to host a further event-driven application 135, orchestration component 170 can initiate and manage the instantiation of the virtual machines 310 on the one or more servers 100 to support such needs. In one example implementation, virtualisation environment 165 may be implemented by running Amazon Elastic Compute Cloud (Amazon EC2) on servers 100.

Cloud computing environment 10 supports an execution environment 125 that comprises a plurality of virtual machines 185 (or plurality of containers 130) instantiated to host the one or more event-driven applications 135.

Event-driven applications 135 can access internal services provided by cloud computing environment 10 as well as external services from the plurality of external providers 40 and from the local server 20. A service provisioner 155 may serve as a communications intermediary between these available services (e.g., internal services and external services) and other components of cloud computing environment 10 (e.g., cloud controller 150, router 140, containers 130), utilising the methods discussed elsewhere herein. Addressing and discovery layer 160 provides a common interface through which components of cloud computing environment 10, such as service provisioner 155, cloud controller 150, router 140 and containers 130 in the execution environment 125 can communicate.

Cloud controller 150 is configured to orchestrate the deployment process for the one or more event-driven applications 135 in cloud computing environment 10. Typically, once cloud controller 150 successfully orchestrates the event-driven application 135 in a container, e.g. container A 130, the event-driven application 135 may be interacted with. For example, a user device 60 may interact with the event-driven application 135 through a web browser or any other appropriate user application residing on user device 60. Router 140 receives the access requests (e.g., a uniform resource locator or URL) and routes the request to container 130 which hosts the event-driven application.

It should be recognised that the embodiment of Figure 3A is merely exemplary and that alternative cloud computing environment architectures may be implemented consistent with the teachings herein.

Figure 3B is a schematic of an exemplary server 100 for implementing the cloud computing environment 10 of the invention. In particular, Figure 3B depicts server 100 comprising server hardware 190 and virtual machine execution environment 125 having containers 130 with event-driven applications 135. The server hardware 190 may include local storage 194, such as a hard drive, network adapter 195, system memory 196, processor 197 and other I/O devices such as, for example, a mouse and keyboard (not shown).

A virtualisation software layer, also referred to as hypervisor 180, is installed on top of server hardware 190. Hypervisor 180 supports virtual machine execution environment 185 within which containers 130 may be concurrently instantiated and executed. In particular, each container 130 one or more event-driven applications 135, deployment agent 137, runtime environment 136 and guest operating system 138 packaged into a single object. This enables container 130 to execute event-driven applications 135 in a manner which is isolated from the physical hardware (e.g. server hardware 190, cloud computing environment hardware 110), allowing for consistent deployment regardless of the underlying physical hardware.

As shown in Figure 3B, virtual machine execution environment 125 of server 100 supports a plurality of containers 130. Docker is an example of a virtual machine execution environment 125 which supports containers 130. For each container 130, hypervisor 180 manages a corresponding virtual machine 185 that includes emulated hardware such as virtual hard drive 181, virtual network adaptor 182, virtual RAM 183, and virtual CPU 184.

It should be recognised that the various layers and modules described with reference to Figure 3B are merely exemplary, and that other layers and modules may be used with the same functionality without departing from the scope of the invention. It should further be recognised that other virtualised computer architectures may be used, such as hosted virtual machines.

Turning to Figure 4A, an example user device 60 for communicating with the cloud computing environment 10 is shown. User device 60 may be embodied as any type of computer, including a server, a desktop computer, a laptop, a tablet, a mobile device, or the like. Components of user device 60 include, but are not limited to, a processor 611, such as a central processing unit (CPU), system memory 612, and system bus 613. System bus 613 provides communicative coupling for various components of user device 60, including system memory 612 and processor 611. Example system bus architectures include parallel buses, such as Peripheral Component Interconnect (PCI) and Integrated Drive Electronics (IDE), and serial buses, such as PCI Express (PCIe) and Serial ATA (SATA).

System memory 612 is formed of volatile and/or non-volatile memory such as read only memory (ROM) and random-access memory (RAM). ROM is typically used to store a basic input/output system (BIOS), which contains routines that boots the operating system and sets up the components of user device 60, for example at start-up. RAM is typically used to temporarily store data and/or program modules that the processor 611 is operating on.

User device 60 includes other forms of memory, including (computer readable) storage media 615, which is communicatively coupled to the processor 611 through a memory interface 614 and the system bus 613. Storage media 615 may be or may include volatile and/or non-volatile media. Storage media 615 may be or may include removable or non-removable storage media.

Examples storage media 615 technologies include: semiconductor memory, such as RAM, flash memory, solid-state drives (SSD); magnetic storage media, such as magnetic disks; and optical storage, such hard disk drives (HDD) and CD, CD-ROM, DVD and BD-ROM. Data stored in storage medium 615 may be stored according to known methods of storing information such as program modules, data structures, or other data, the form of which is discussed further herein.

Various program modules are stored on the system memory 612 and/or storage media 615, including an operating system and one or more user applications. Such user applications may cause the user device 60 to interact with cloud computing environment 10. For instance, the user application may cause an event-driven application 135 to begin processing protected data on the cloud computing environment 10.

User device 60 is communicatively coupled to the cloud computing environment 10 via the least one communication network, such as the Internet. Other communication networks may be used including a local area network (LAN) and/or a wide area network (WAN). Further communication networks may be present in various types of user device 60, such as mobile devices and tablets, to cellular networks, such as 3G, 4G LTE and 5G. User device 60 establishes communication through network interface 619.

User device 60 is communicatively coupled to a display device via a graphics/video interface 616 and system bus 613. In some instances, the display device may be an integrated display. A graphical processing unit (GPU) 626 may be used in addition to improve graphical and other types of processing. User device 60 also includes an input peripheral interface 617 and an output peripheral interface 618 that are communicatively coupled to the system bus 613. Input peripheral interface is communicatively coupled to one or more input devices, such as a keyboard, mouse or touchscreen, for interaction between the user device 60 and a user. Output peripheral interface 618 is communicatively coupled to one or more output devices, such as a speaker. When not integrated, the communicative coupling may be wired, such as via a universal serial bus (USB) port, or wireless, such as over Bluetooth.

Figure 4B depicts an example external provider system 40. The components of the external provider system 40 may be the same as those described above for user device 60. In particular, the external provider system 40 may comprise a system bus 413, processor 411, system memory 412, memory interface 414, storage media 415, graphics/video interface 416, GPU 426, input peripheral interface 417, output peripheral interface 418 and network interface 419. In certain embodiments, the external provider system 40 may take the form of an enterprise server.

### Cloud Computing Environment Architecture

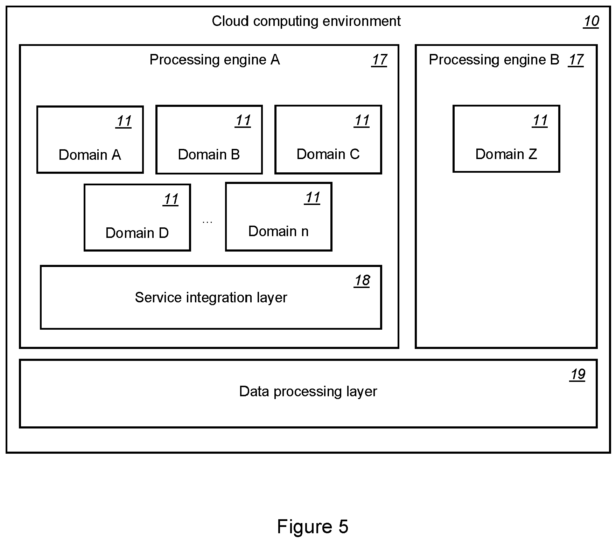

Figure 5 depicts an embodiment of cloud computing environment 10 architecture for implementing the present invention.

As shown in Figure 5, the cloud computing environment 10 contains one or more processing engines 17. Preferably, there are a plurality of processing engines 17. Figure 5 depicts two processing engines, processing engine A and processing engine B. Each processing engine 17 in the cloud computing environment 10 is a logical partition that is responsible for providing a particular processing function or subset of processing functions. Each processing engine 17 operates in an event-driven fashion. In other words, each processing engine 17 processes data as discrete events, and is able to support event-driven applications 135 of the type discussed with respect to Figure 3A and Figure 3B.

Each processing engine 17 has one or more domains 11. The domains 11 in a particular processing engine 17 provide security boundaries for protected data in the cloud computing environment 10. These domains may be separate and distinct within the cloud computing environment 10 allowing for the control of access to data based on different security levels. This separation of domains ensures that data is protected and only accessible by authorised users or applications. The domains 11 also modularise the particular processing function or subset of processing functions. Such modular architectures offer advantages such as scalability, reusability, and ease of maintenance by breaking the processing engine 17 down into smaller, interchangeable domains. Like the processing engines 17, each domain 11 processes data as discrete events and is therefore able to support event-driven applications 135 of the type discussed with respect to Figure 3A and Figure 3B. Moreover, each domain 11 may be implemented through serverless capabilities of the cloud computing environment 10. For example, when the cloud computing environment 10 is an AWS environment, such serverless capabilities may include DynamoDB, Amazon S3, AWS Lambda, AWS Step Functions, and Amazon API gateway. Optionally, each domain 17 may be composed of one or more sub domains.

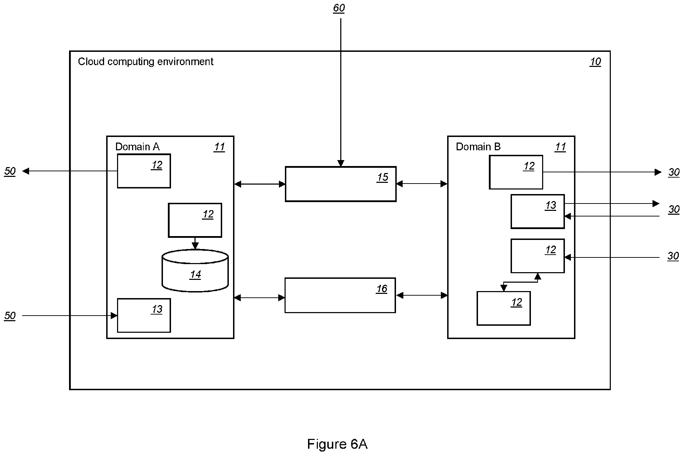

Referring briefly to Figure 6A, each domain 11 contains one or more processing modules 12. The processing modules 12 are event-driven and can be used within one or more event-driven applications 135. Put another way, the processing modules 12 are agnostic to the event-driven applications 135, and therefore may be combined with other components to easily create a new event-driven application 135. This flexibility enables the cloud computing environment 10 to adapt to changing requirements and support a wide range of event-driven applications 135. When the cloud computing environment 10 is an AWS environment, each of the processing modules 12 may be hosted on AWS ECS (Container) running on EC2 or AWS Fargate.

In some examples, the domain 11 may include one or more data streams 13 that are configured to stream protected data. These data streams 13 are event-driven and may have incoming and outgoing connections to various components within the cloud computing environment 10 and outside of the cloud computing environment 10. For instance, within the cloud computing environment 10, the data steams 13 may be used to communicate data to and/or from one or more processing modules 12, one or more domains 11, one or more processing engines 17, one or more databases 14, and the like. Outside of the cloud computing environment 10, the data steams 13 may be used to communicate with local server 20 and/or external provider systems 40. In an AWS environment, such data steams 13 may be provided by Amazon Kinesis, which is a particular type of scalable and durable real-time data streaming application, or another data streaming application.

Each domain 11 may also contain one or more domain databases 14. Domain databases 14 may be used for different reasons, such as to log event processing occurring within the domain 11. In some examples, a database 14 is configured to store protected data. The database 14 may be a NoSQL database, such as DynamoDB, which provides a flexible and scalable approach for storing and managing data. The use of a NoSQL database 14 ensures that the cloud computing environment 10 can efficiently handle large volumes of data and support a wide range of applications.

The one or more processing modules 12, data steams 13, and domain databases 14 work together to provide a scalable, secure, and efficient domain 11 for processing and managing protected data.

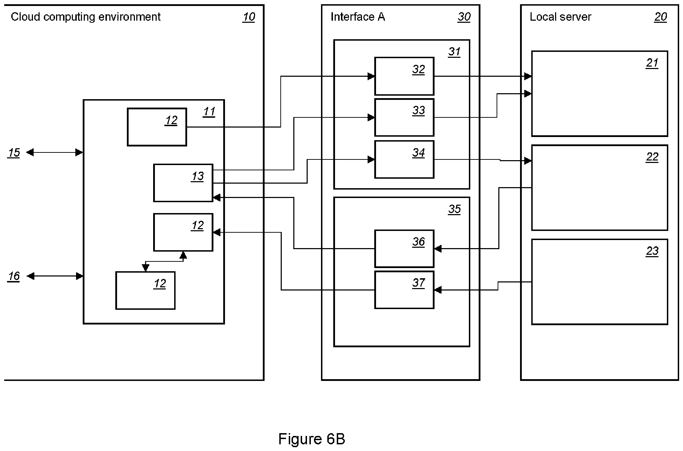

Referring back to Figure 5, processing engine 17 may contain a service integration layer 18. The service integration layer 18 is responsible for communications with local server 20. In particular, the service integration layer 18 uses APIs and/or event streaming patterns (as discussed with respect to Figure 6B) to enable standardisation and scaling for data between the processing engine 17 in the cloud computing environment 10 and the local server 20. Preferably, the service integration layer 18 includes an anti-corruption layer to facilitate integration between local server 20 (which does not support event-driven applications) to the cloud computing environment 10 (which does support event-driven applications) and vice versa.

In one particular consumer banking example, the cloud computing environment 10 is an AWS environment. In such an example, the cloud computing environment 10 includes at least two processing engines 17: processing engine A relating to financial product processing and processing engine B relating to application processing. Processing engine A 17 includes a plurality of domains 11, i.e. domains A, B, C, D... n. Such domains may include product management domains, primary domains, feature-driven domains and supplementary domains. Examples of primary domains include a payment processing domain, which manages real time account balances and supports user payment activity, and a transaction processing domain which relates to accounting and operational processing. Another example of a primary domain is an account operation domain, which controls how the execution of a process for an account is to be operated. Processing engine B includes one domain 11, i.e. domain Z. Such a domain may be an apply domain that is used so that a new or established user can apply to receive various resources (e.g. financial resources). The apply domain may also be used to on-board new users to the cloud computing environment 10.

Turning back to Figure 5, the cloud computing environment 10 also includes a data processing layer 19. The data processing layer 19 provides a common aggregation point for cloud computing environment 10 for providing data to various data platforms, for further analysis and/or manipulation.

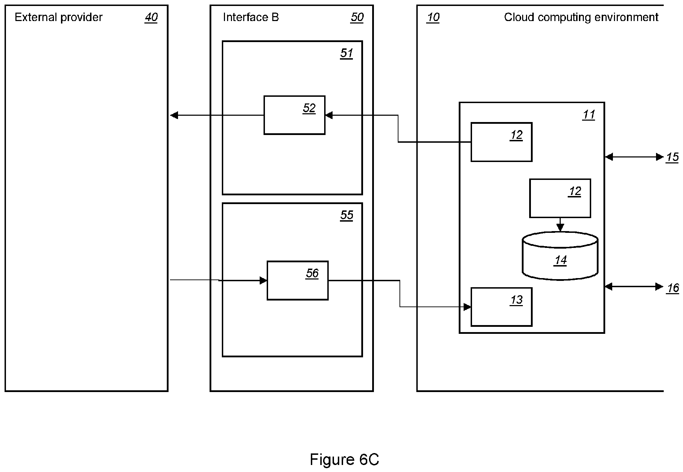

Figure 6A, Figure 6B and Figure 6C show example integration patterns of cloud computing environment 10 for implementing the invention. The integration patterns are a prescribed set of rules for connecting and coordinating different software components to and within the cloud computing environment 10. Such integration patterns particularly assist with data exchange, communication, and interoperability of various applications, including event-driven applications 135 and batch-driven applications. Figure 6A shows integration patterns within cloud computing environment 10 and from user device 60. Figure 6B depicts integration patterns between cloud computing environment 10 and local server 20, whilst Figure 6C shows integration patterns between cloud computing environment 10 and external provider system 40.

Referring first to Figure 6A, two integration patterns are shown. In particular, the cloud computing environment 10 is shown to include a first integration pattern, an inter-domain API (Application Programming Interface) 15. The inter-domain API 15 is configured to connect user devices 60 with one or more domains 11. This inter-domain API 15 allows user devices 60 to access and interact with the cloud computing environment 10, enabling users to, for example, call an application service API exposed by a domain 11 and/or access and manage their protected data securely and efficiently. In particular, this connection allows the user devices 60 to access and interact with the various processing modules 12, data streams 13, and other components within the domains 11.

In some examples, the inter-domain API 15 may provide a secure and efficient communication channel between the user devices 60 and the cloud computing environment 10. This secure communication channel may be established using various security protocols, including HTTPS, and encryption techniques to ensure the confidentiality, integrity, and availability of the data being transmitted between the user devices 60 and the cloud computing environment 10. The inter-domain API 15 may also provide various functionalities and services to the user devices 60, such as authentication, authorisation, data retrieval, data manipulation, and other application-specific operations. By providing these functionalities and services, the inter-domain API 15 enables the user devices 60 to seamlessly interact with the cloud computing environment 10 and perform various tasks and operations within the hosted applications 135.

A second integration pattern, inter-domain message bridge 16, is also shown in Figure 6A. The inter-domain message bridge 16 is positioned between two (or more) domains, and allows events in one domain to be pushed or pulled to another domain. This inter-domain message bridge 16 enables efficient communication and data transfer between domains, ensuring that data is processed and managed securely and efficiently within the cloud computing environment 10. This is particularly advantageous in a cloud computing environment 10 that comprises a plurality of domains 11 with different security boundaries and data processing requirements.

The inter-domain message bridge 16 is designed to support event-driven communication between domains 11, which is a key aspect of the asynchronous event-driven applications 135 hosted within the cloud computing environment 10. By enabling events in one domain 11 to be pushed or pulled (or "published") to another domain 11 as needed, the inter-domain message bridge 16 ensures that the processing modules 12 within the domains 11 can efficiently handle and process the protected data in an event-driven manner. The inter-domain message bridge 16 may be configured to support different event data formats, including NoSQL and JSON, to ensure compatibility with the various processing modules 12 and applications 135 within the cloud computing environment 10.

Reference is now made to Figure 6B, which depicts integration patterns between cloud computing environment 10 and local server 20. Figure 6B provides a more detailed view of the first interface module (interface module A) 30, which includes a first conversion module 31 and a second conversion module 35. The first interface module A may be an interface module according to embodiments of the invention.

The first conversion module 31 is configured to handle outgoing data from the cloud computing environment 10 to the local server 20, and includes three integration patterns: outbound to local server API 32, fire and forget API 33, and a file batcher 34. The outbound to local server API 32 pattern is used where the local server 20 needs to consume real-time data from the cloud computing environment 10. File batcher 34 is used to collect events and consolidate the events into a scheduled batch file to provide to the local server 20.

Fire and forget API 33 is used where some of the events within the cloud computing environment 10 need to be published to the local server 20. The fire and forget API 33 may perform some or all of the steps of methods according to the present invention. For example, the fire and forget API 33 may perform both the determination as to whether a target synchronous API at the local server 20 will perform an idempotency check (so as to make an idempotency check at the first interface module A redundant). The fire and forget API 33 may also then itself be used to perform the sender-side idempotency check if the target synchronous API is determined not to have an in-built idempotency check. Alternatively, the fire and forget API 33 may communicate with a separate integration pattern within first interface module A to perform the idempotency check.

The second conversion module 35 is configured to handle incoming data from the local server 20 to the cloud computing environment 10 and comprises two integration patterns: file debatcher 36 and inbound from local server API 37. File debatcher 36 is used to pass data from the local server, which is typically in the form of a batch file, to the cloud computing environment 10, which is event-driven. The inbound from local server API 37 is used where data is to be passed in real-time from the local server 20 to the cloud computing environment 10.

It is noted that, as shown in Figure 6B, local server 20 may comprise a plurality of partitions, such as a first partition 21, a second partition 22, and a third partition 23. These servers may be responsible for different tasks or functions related to the processing of protected data in synchronous batch-driven applications. Although three partitions are shown in Figure 6B, any number of partitions, including a single partition, may be present at local server 20. Partitions 21, 22, and 23 may each comprise a number of synchronous APIs in communication with the cloud computing environment 10 via the first interface module A.

It should be appreciated that, although the first interface module A is depicted in Figure 6B as being separate from cloud computing environment 10, it may be considered to be part of cloud computing environment 10. First interface module A may also be considered to be separate from cloud computing environment 10, positioned between environment 10 and local server 20 as shown, but like cloud computing environment 10 to be implemented in an asynchronous, event-based, cloud computing environment.

Reference is now made to Figure 6C which shows integration patterns between cloud computing environment 10 and external provider system 40. In particular, Figure 6C provides further details of the second interface module (interface module B) 50, which includes a first conversion module 51 and a second conversion module 55. Each of the conversion modules in the second interface module 50 has its own integration pattern. In particular, the first conversion module 51 is responsible for sending protected data out to the external provider system 40 from the cloud computing environment 10, and therefore has an outbound to external provider API 52. The second conversion module 55 is responsible for receiving data from the external provider system 40 to the cloud computing environment 10, and therefore has an inbox to external provider API 56.

It should be appreciated that the architecture of cloud computing environment 10 of Figure 5 and the integration patterns of Figure 6A, Figure 6B and Figure 6C are merely exemplary. Other architectures and integration patterns may be used for implementing the invention.

### Method of Interfacing

The invention provides a method of interfacing a synchronous API 210, which may be integrated with a batch-driven application 235 running on local server 20, with one or more asynchronous event-driven applications 135 running on cloud computing environment 10. In some implementations, the method of interfacing is between a single synchronous batch-driven application 235 and a single event-driven application 135. In other implementations, the method of interfacing is between a plurality of different synchronous batch-driven applications 235 and a plurality of different event-driven applications 135. The method occurs over the first interface module (i.e. interface A) 30. As previously discussed, the first interface module 30 may be implemented within the cloud computing environment 10 (i.e. running on the cloud computing environment 10), or elsewhere (i.e. running on the local server 20 or separately to the local server 20 and the cloud computing environment 10).

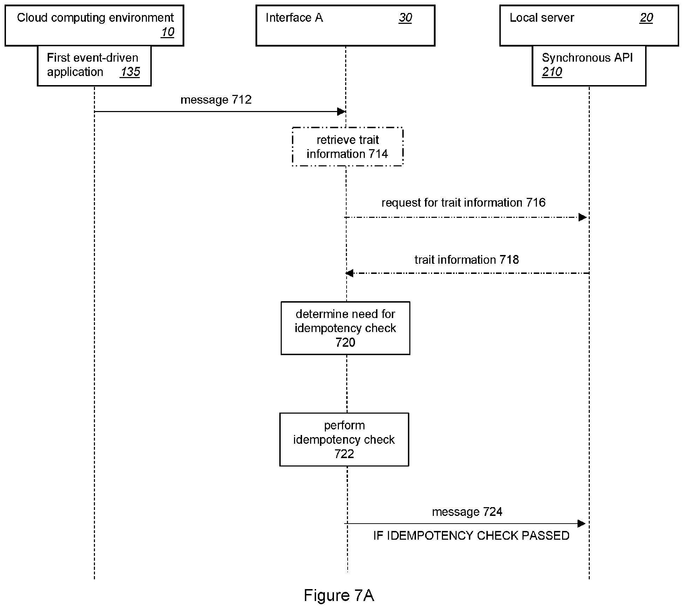

In a first exemplary method, depicted in Figure 7A, the method determines that no idempotency check will be performed by synchronous API 210, and that an idempotency check must therefore be performed at interface A.

In a first step 712, a message is received at interface A from first event-driven application 125 in cloud computing environment 10. It will be appreciated that message 712 may reach interface A in a format suitable for transmission to local server 20, having previously been transformed from event- to batch-driven in environment 10 or elsewhere in interface A, for example.

Additionally, or alternatively, a distinct message for sending to local server 20 may be generated by interface A in response to reception 712 of the original message. For example, the message from cloud computing environment 10 may require transmitting to multiple synchronous APIs at local server 20, necessitating the generation of a plurality of messages at interface A for sending to each synchronous API. In this way, interface A may be considered either to have received the message for sending to the local server 20 or may itself have generated it.

Steps 714, 716, and 718 in Figure 7A are shown in dashed lines because it will be appreciated that they do not all need to occur. If, in step 714, trait information can be retrieved from a storage location within interface A, then steps 716 and 718 need not be performed. The opposite may also be true, such that steps 716 and 718 are performed but step 714 is not. Alternatively, all of steps 714, 716, and 718 may be performed if, for example, retrieved trait information at step 714 is deemed to have been retrieved too long ago for its accuracy to be relied upon, such that steps 716 and 718 are then initiated.

In step 714, trait information is retrieved from a storage location local to the interface A. It is determined whether or not trait information related to the target synchronous API 210 is stored in the storage location and, if so, the trait information is retrieved. The storage location may be, for example, a lookup table populated by previous requests to retrieve trait information and/or manually input trait information. The trait information may be stored in the storage location in any manner that facilitates its efficient retrieval.

In step 716, the interface A sends a request to the target synchronous API 210 for trait information. The request requires that the trait information provided comprise at least the idempotency-trait of the target synchronous API 210, i.e. whether or not the API 210 will perform an idempotency check upon reception of a message and/or upon processing of a task. The request can specify that the trait information is provided in a particular format that facilitates efficient determination in step 720 and/or efficient storage of the received trait information (not shown) in the storage location.

In step 718, synchronous API 210 provides the requested trait information in the format requested.

In step 720, interface A analyses the provided trait information to determine whether or not the synchronous API 210 will perform an idempotency check when sent a message. The trait information may, for example, provide an instant definitive idempotency determination (e.g. the trait information comprises "idempotency check = YES/NO", or similar). Alternatively, the interface A can derive whether or not an idempotency check will be performed by the synchronous API 210 based on a different trait of the API 210. For example, the synchronous API 210 may be defined within the local server 20 as a certain type or class of API. Some classes of API might perform idempotency checks and others might not. In this case, request 716 requests the class of the API (e.g. "API class = C"). The interface module A determines in step 720 that APIs of class C do not perform idempotency checks, thus the target synchronous API 210 will not perform an idempotency check when transmitted message 724. The interface A thus determines, at step 720 to perform an idempotency check prior to transmission of message 724.

It is possible that synchronous API 210 does not provide any response to request 716 or does not provide trait information sufficient for a positive determination to be made in step 720. API 210 may provide, for example, authentication credentials only, which do not allow the interface A to determine the idempotency procedure of the API 210. In this case, determination step 720 determines that a sender-side idempotency check at the interface A is required.

At step 722, the interface A performs an idempotency check on the message to be sent to the synchronous API 210. If the message is associated with a first idempotency key, interface A retrieves the idempotency key and searches a list of sent idempotency keys stored at interface A. If the first idempotency key appears in the list, the message is not sent to API 210. Optionally, a new message may be generated at interface A and sent to cloud computing environment 10 notifying environment 10 of the failure of the idempotency check.

Additionally, or alternatively, the interface A at step 722 performs the idempotency check by determining whether the message to be sent to API 210 is inherently idempotent based on its content. For example, a message which, when actioned at API 210 and/or local server 20, leads to data retrieval, the message may be deemed to have passed the idempotency check because data retrieval can be actioned multiple times without changing the end result that the data is retrieved. Similarly, a message which requests a YES/NO answer to a search query in a database at the local server 20 may also be inherently idempotent - it is immaterial how many times the interface A and cloud computing environment 10 receive an answer to said search query.

In contrast, a message which, when actioned, will cause a 'write' action in a database at local server 20 is not inherently idempotent, and will thus fail the idempotency check at 722. If a 'write' message is actioned multiple times, multiple duplicate data entries will be added to the database, which could cause operational issues or data security breaches if unintentional for reasons previously detailed.

Since passing of either one of the above two forms of idempotency check will ensure no deleterious effects can arise from message transmission 724, interface A may deem the message to pass the idempotency check if either or both forms of idempotency check is passed.

At step 724, the message is transmitted to the synchronous API 210 at the local server 20.

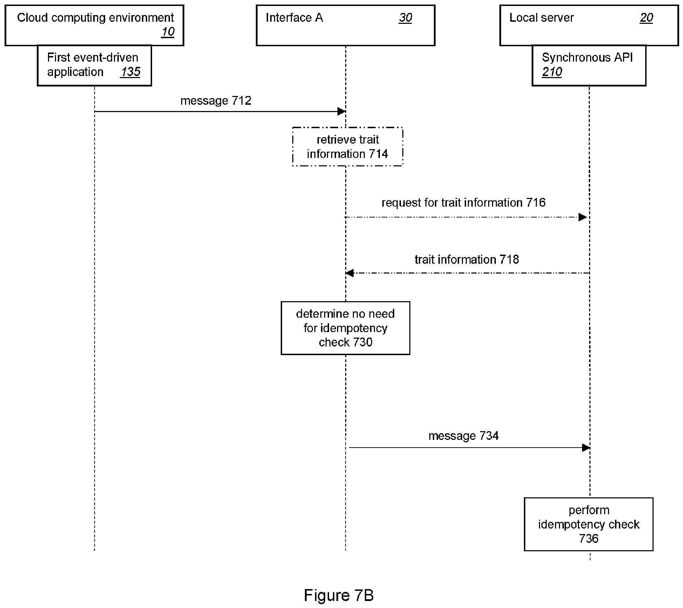

Figure 7B is similar to Figure 7A, with identical steps 712, 714, 716, and 718. In the example of Figure 7B, however, interface A determines at a step 730 that no idempotency check is required at the interface A prior to transmitting the message. The interface A has determined that at lest one of: the message to be sent has never previously been sent to the API 210; or the message to be sent is inherently idempotent.

In this case, interface A can proceed directly to transmit the message at a step 734. In such a case, the API 210 performs an idempotency check 736 on the message prior to actioning it.

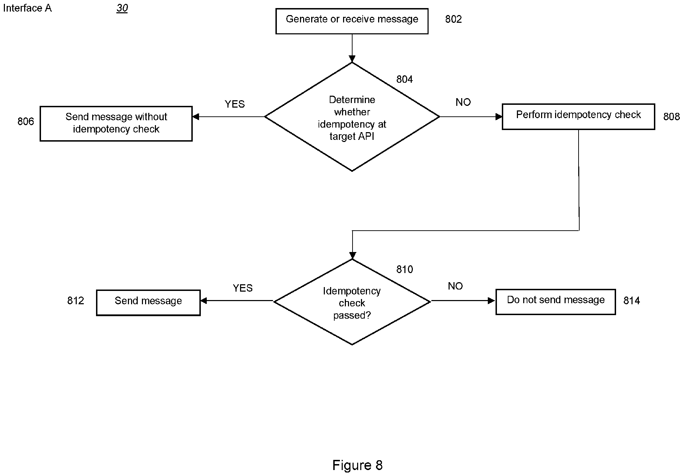

Figure 8 shows the method steps performed at an interface A (first interface module 30) in order to facilitate communication between an asynchronous environment and a synchronous application programming interface. At step 802, the interface A generates or receives a message for sending to a synchronous API (not shown in Figure 8).

At step 804, the interface module determines whether or not the target synchronous API will perform an idempotency check prior to actioning the message. If YES (the target synchronous API will perform an idempotency check prior to actioning the message), the interface module proceeds to send the message without performing its own idempotency check at step 806. If NO (the target synchronous API will not perform an idempotency check prior to actioning the message), the interface A proceeds to perform its own idempotency check 808 prior to sending the message.

At step 810 the interface module A determines whether or not the idempotency check has been passed. If YES, the message is sent 812 to the API. If NO, the message is not sent 814 to the API.

### General

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. An interface module for facilitating communication with a synchronous application programming interface, the module being configured to: generate or receive a message to be sent to the synchronous API; and determine whether or not the synchronous API has an idempotency check; wherein upon determining that the synchronous API has an idempotency check, the module is further configured to: perform no idempotency check; and send the message to the synchronous API, and wherein upon determining that the synchronous API does not have an idempotency check, the module is further configured to: perform an idempotency check; and send the message to the synchronous API if the message passes the idempotency check or not send the message to the synchronous API if the message fails the idempotency check.
2. The interface module of embodiment 1, being further configured, after sending the message to the synchronous API and whether or not the synchronous API has an idempotency check, to: perform a subsequent action without requiring any response from the synchronous API to acknowledge receipt or confirm actioning of the message.
3. The interface module of embodiment 1 or embodiment 2, wherein the module is configured to determine whether or not the synchronous API has an idempotency check by being configured to: retrieve trait information from a storage location in the interface module, wherein the trait information comprises at least one trait of the synchronous API, and wherein the at least one trait comprises the existence or not at the synchronous API of an idempotency check; determine whether or not the synchronous API has an idempotency check based on the retrieved trait information.
4.The interface module of embodiment 1 or embodiment 2, wherein the module is configured to determine whether or not the synchronous API has an idempotency check by being configured to: i) send, to the synchronous API, a request for trait information, wherein the trait information comprises at least one trait of the synchronous API, and wherein the at least one trait comprises the existence or not at the synchronous API of an idempotency check; ii) receive the trait information from the synchronous API; and iii) determine whether or not the synchronous API has an idempotency check based on the received trait information.
5. The interface module of embodiment 4, being further configured to: generate or receive a second message to be sent to the synchronous API; and repeat steps i) to iii) of embodiment 4 for the second message.
6. The interface module of embodiment 4, being further configured to: generate or receive a second message to be sent to the synchronous API; retrieve the previously received trait information from a storage location in the interface module; and repeat step iii) of embodiment 4 for the second message based on the previously received trait information.
7. The interface module of embodiment 4, being further configured to: generate or receive a second message to be sent to the synchronous API; retrieve the previously received trait information; identify a time period since the trait information was received; and if the time period is less than a threshold value, repeat step iii) of embodiment 4 for the second message based on the previously received trait information, or if the time period is greater than a threshold value, repeat steps i) to iii) of embodiment 4 for the second message.
8. The interface module of any preceding embodiment, being further configured to: receive, from the synchronous API, a response to the message, the response comprising confirmation of successful actioning of the message or an error report.
9. The interface module of any preceding embodiment, wherein the trait information further comprises at least one of: authentication requirements; accepted message types; synchronicity; and format of response.
10. The interface module of any preceding embodiment, wherein the interface module is configured to interface between an asynchronous computing environment and a synchronous computing environment, the synchronous computing environment comprising the synchronous API.
11. The interface module of embodiment 10, wherein the asynchronous computing environment is an event-driven cloud computing environment and wherein the synchronous computing environment is a non-event-driven on-premises computing environment.
12. The interface module of embodiment 11, wherein the message and/or second message comprises an event.
13. The interface module of any preceding embodiment, wherein the interface module is configured to perform an idempotency check by determining whether the message has previously been sent to the synchronous API, and wherein the interface module is configured to pass the idempotency check if the message has not previously been sent to the synchronous API and to fail the idempotency check if the message has previously been sent to the synchronous API.
14. The interface module of any preceding embodiment, wherein the interface module is configured to perform an idempotency check by determining whether the message, if actioned more than once by the synchronous API, will have a duplicative effect, and wherein the interface module is configured to pass the idempotency check if the message will not have a duplicative effect and to fail the idempotency check if the message will have a duplicate effect.
15. A computer-implemented method for facilitating communication with a synchronous application programming interface, the method comprising, at an interface module: generating or receiving a message to be sent to the synchronous API; and determining whether or not the synchronous API has an idempotency check; wherein upon determining that the synchronous API has an idempotency check, the method further comprises: performing no idempotency check; and sending the message to the synchronous API, and wherein upon determining that the synchronous API does not have an idempotency check, the method further comprises: performing an idempotency check; and sending the message to the synchronous API if the message passes the idempotency check or not sending the message to the synchronous API if the message fails the idempotency check.
16. The computer-implemented method of embodiment 15, further comprising performing, at the interface module, any step performed by the interface module of embodiments 1 to 14.
17. A data processing apparatus comprising means for carrying out the steps of any preceding method embodiment.
18. A computer program comprising instructions which, when the program is executed by a computer, cause the computer to carry out the steps of any preceding method embodiment.
19. A computer-readable storage medium comprising instructions which, when executed by a computer, cause the computer to carry out the steps of any preceding method embodiment.
20. A cloud computing environment comprising the interface module of any one of embodiments 1 to 14.

## Claims

1. An interface module for facilitating communication with a synchronous application programming interface, the module being configured to:
generate or receive a message to be sent to the synchronous API; and
determine whether or not the synchronous API has an idempotency check;
wherein upon determining that the synchronous API has an idempotency check, the module is further configured to:
perform no idempotency check; and
send the message to the synchronous API, and
wherein upon determining that the synchronous API does not have an idempotency check, the module is further configured to:
perform an idempotency check; and
send the message to the synchronous API if the message passes the idempotency check or not send the message to the synchronous API if the message fails the idempotency check.

2. The interface module of claim 1, being further configured, after sending the message to the synchronous API and whether or not the synchronous API has an idempotency check, to:
perform a subsequent action without requiring any response from the synchronous API to acknowledge receipt or confirm actioning of the message.

3. The interface module of claim 1 or claim 2, wherein the module is configured to determine whether or not the synchronous API has an idempotency check by being configured to:
retrieve trait information from a storage location in the interface module, wherein the trait information comprises at least one trait of the synchronous API, and wherein the at least one trait comprises the existence or not at the synchronous API of an idempotency check; and
determine whether or not the synchronous API has an idempotency check based on the retrieved trait information.

4. The interface module of claim 1 or claim 2, wherein the module is configured to determine whether or not the synchronous API has an idempotency check by being configured to:
i) send, to the synchronous API, a request for trait information, wherein the trait information comprises at least one trait of the synchronous API, and wherein the at least one trait comprises the existence or not at the synchronous API of an idempotency check;
ii) receive the trait information from the synchronous API; and
iii) determine whether or not the synchronous API has an idempotency check based on the received trait information.

5. The interface module of claim 4, being further configured to:
generate or receive a second message to be sent to the synchronous API; and
repeat steps i) to iii) of claim 4 for the second message.

6. The interface module of claim 4, being further configured to:
generate or receive a second message to be sent to the synchronous API;
retrieve the previously received trait information from a storage location in the interface module; and
repeat step iii) of claim 4 for the second message based on the previously received trait information.

7. The interface module of claim 4, being further configured to:
generate or receive a second message to be sent to the synchronous API;
retrieve the previously received trait information;
identify a time period since the trait information was received; and
if the time period is less than a threshold value, repeat step iii) of claim 4 for the second message based on the previously received trait information, or
if the time period is greater than a threshold value, repeat steps i) to iii) of claim 4 for the second message.

8. The interface module of any preceding claim, being further configured to:
receive, from the synchronous API, a response to the message, the response comprising confirmation of successful actioning of the message or an error report.

9. The interface module of any preceding claim, wherein the trait information further comprises at least one of: authentication requirements; accepted message types; synchronicity; and format of response.

10. The interface module of any preceding claim, wherein the interface module is configured to interface between an asynchronous computing environment and a synchronous computing environment, the synchronous computing environment comprising the synchronous API, wherein the asynchronous computing environment is an event-driven cloud computing environment, and wherein the synchronous computing environment is a non-event-driven on-premises computing environment, and wherein the message and/or second message comprises an event.

11. The interface module of any preceding claim, wherein the interface module is configured to perform an idempotency check by:
determining whether the message has previously been sent to the synchronous API, and wherein the interface module is configured to pass the idempotency check if the message has not previously been sent to the synchronous API and to fail the idempotency check if the message has previously been sent to the synchronous API; or
determining whether the message, if actioned more than once by the synchronous API, will have a duplicative effect, and wherein the interface module is configured to pass the idempotency check if the message will not have a duplicative effect and to fail the idempotency check if the message will have a duplicate effect.

12. A computer-implemented method for facilitating communication with a synchronous application programming interface, the method comprising, at an interface module, performing the steps performed by the interface module of any one of claims 1 to 11.

13. A data processing apparatus comprising means for carrying out the steps of claim 12.

14. A computer program comprising instructions which, when the program is executed by a computer, cause the computer to carry out the steps of claim 12.

15. A computer-readable storage medium comprising instructions which, when executed by a computer, cause the computer to carry out the steps of claim 12.
